# EUROPÄISCHE PATENTSCHRIFT

(11) **EP 3 553 229 B1**
(45) Veröffentlichungstag und Bekanntmachung des Hinweises auf die Patenterteilung: **29.05.2024**
(21) Anmeldenummer: 18166806.2
(22) Anmeldetag: 11.04.2018
(51) Int. Cl.: E02D 7/00

(54) **TIEFBAUVORRICHTUNG UND SYSTEM ZUM ÜBERWACHEN EINER BAUSTELLE**
EXCAVATION DEVICE AND SYSTEM FOR MONITORING A CONSTRUCTION SITE
DISPOSITIF D'EXCAVATIONS ET SYSTÈME DE SURVEILLANCE D'UN CHANTIER

(43) Veröffentlichungstag der Anmeldung: 16.10.2019
(73) Patentinhaber: BAUER Spezialtiefbau GmbH, 86529 Schrobenhausen (DE)
(72) Erfinder:
(74) Vertreter: Wunderlich & Heim Patentanwälte PartG mbB

(56) Entgegenhaltungen:
- EP-A1- 2 378 054
- EP-A2- 1 482 238
- WO-A1-2018/078054
- CN-U- 205 242 405
- JP-A- 2010 241 548

## Beschreibung

Die Erfindung betrifft eine Tiefbauvorrichtung mit einem Unterwagen mit Raupenfahrwerk, einem Oberwagen, der auf dem Unterwagen angeordnet ist, und einem Mast, welcher vertikal gerichtet und an dem Oberwagen angebracht ist, gemäß dem Oberbegriff des Anspruchs 1.

Eine Tiefbauvorrichtung, welche als ein Bohrgerät ausgebildet ist, ist beispielsweise in der EP 2 378 054 A1 gezeigt. Insbesondere ist aus dieser Druckschrift eine Sicherheitseinrichtung für eine Baumaschine bekannt, mit welcher immer höheren Anforderungen an die Betriebs- und Arbeitssicherheit Rechnung getragen wird. Diese Baumaschine ist dabei mit einer Vielzahl von Sensoren ausgestattet, welche den jeweiligen Betriebszustand erfassen, um kritische Betriebssituationen zu vermeiden.

Die CN 205 242 405 U offenbart eine gattungsgemäße Tiefbauvorrichtung mit einer Kamera an einem Mast.

Die JP-2010 241 548 A1 betrifft keine Tiefbauvorrichtung, sondern einen Kran zum Heben und Senken einer Last. Diese bekannte Kranvorrichtung weist verschiedene Kameras auf, mit denen spezielle Helme H von Personen auf dem Boden erfasst werden können. Die erfassten Helme können in einem Display angezeigt werden, das einer Bedienperson schematisch das Gerät von oben mit einem Gefahrenbereich um die aufgehängte Last anzeigt.

Die EP 2 378 054 A1 offenbart eine Baumaschine mit einer Sicherheitseinrichtung, bei welcher einem Maschinenbediener auf einer Anzeigeeinrichtung die Baumaschine mit einem möglichen Verstellbereich angezeigt wird, in welchem eine Verstellung einer Betätigungseinrichtung ohne Kippgefahr möglich ist. Es ist nicht vorgesehen, eine Kamera an der Tiefbauvorrichtung anzubringen.

Der Erfindung liegt die **Aufgabe** zugrunde, eine Tiefbauvorrichtung anzugeben, mit welcher eine verbesserte Sicherheit erreichbar ist.

Die Aufgabe wird nach der Erfindung durch eine Tiefbauvorrichtung mit den Merkmalen des Anspruchs 1 gelöst. Bevorzugte Ausführungsformen sind in den abhängigen Ansprüchen angegeben.

Eine Grundidee der Erfindung kann darin gesehen werden, mindestens eine Kamera am Mast der Tiefbauvorrichtung zu Überwachungszwecken anzuordnen. Kameras, insbesondere elektronische Kameras sind zu Überwachungszwecken grundsätzlich bekannt. Ein Aspekt der Erfindung besteht jedoch darin, bei dem speziellen Aufbau einer Tiefbauvorrichtung die Kamera nicht einfach am Oberwagen, sondern oberhalb des Oberwagens an einem oberen Bereich des Mastes der Tiefbauvorrichtung anzuordnen. Insbesondere kann die Kamera dabei an dem quer gerichteten Mastkopf an der Oberseite oder vorzugsweise an der Unterseite des Mastkopfes in geschützter Weise angeordnet sein. Durch diese Positionierung kann nicht nur ein guter Überblick über die Tiefbauvorrichtung und die Umgebung erzielt werden, sondern eine Kamera ist auch am oberen Bereich des Mastes vor den rauen Baustellenbedingungen besonders geschützt angeordnet.

Das Bild kann dabei in einer einfachen Variante an einen Bedienstand oder an eine Zentrale übermittelt werden, wobei eine Überwachung durch eine Person oder durch ein Computersystem erfolgt.

Eine bevorzugte Ausführungsform der Erfindung besteht darin, dass mehrere Kameras angeordnet sind, die in unterschiedliche Richtungen ausgerichtet sind. An dem oberen, üblicherweise T-förmigen Mastende mit einem quer gerichteten Mastkopf sind vorzugsweise eine erste Kamera an einer Vorderseite des Mastkopfes und eine zweite Kamera an der Rückseite des Mastkopfes angeordnet. Es könne auch je zwei Kameras an der Vorderseite und der Rückseite angeordnet sein, wobei die beiden Paare von Kameras dann jeweils zu den gegengerichteten Seiten ausgerichtet sind, so dass ein möglichst umfassendes Umgebungsbild einschließlich einer Draufsicht auf die Tiefbauvorrichtung erreicht wird.

Eine weitere Verbesserung kann nach einer Ausführungsvariante der Erfindung dadurch erzielt werden, dass mindestens eine Kamera schwenkbar gelagert und angetrieben ist. Es kann so mit einer Kamera ein größerer Beobachtungsbereich abgedeckt werden. Insbesondere kann die Kamera auch von einer rückwärtigen Steuereinheit verstellt und fokussiert werden, so dass auch Zoomeinstellungen von Einzelheiten der Tiefbauvorrichtung oder der Umgebung möglich sind.

Besonders zweckmäßig ist es dabei, dass durch die mindestens eine Kamera ein 360°-Umgebungsbild erstellbar ist. Bei der Verwendung mehrerer Kameras sind diese über die Steuereinheit mit einer entsprechenden Software derart verknüpft, dass ein 360°-Umgebungsbild aus mehreren Kameraeinstellungen zusammengesetzt wird. Es kann so von oben eine nahezu vollständige Draufsicht auf die Tiefbauvorrichtung und einen vorgegebenen Umgebungsbereich um die Tiefbauvorrichtung erreicht werden.

Erfindungsgemäß ist vorgesehen, dass die mindestens eine Kamera mit mindestens einer Steuereinheit in Verbindung steht. Die Verbindung kann dabei drahtgebunden oder vorzugsweise drahtlos sein.

Nach einer Weiterbildung der Erfindung ist es besonders vorteilhaft, dass die Steuereinheit in einem Bedienstand der Tiefbauvorrichtung und/oder entfernt von der Tiefbauvorrichtung angeordnet ist. So kann die Steuereinheit sowohl im Bedienstand als auch in einer Zentrale, etwa bei der Bauleitung der Baustelle oder in einer Zentrale des Bauunternehmens, angeordnet sein. Es kann so eine Überwachung der Tiefbauvorrichtung sowohl im Stillstand als auch im Betrieb nicht nur von dem Maschinenbediener, sondern auch von einer dezentralen Überwachungsstelle übernommen werden. So kann in Sicherheitsangelegenheiten der Maschinenbediener zusätzlich von einer entfernten Zentrale unterstützt werden. Die Sicherheit kann sich dabei sowohl auf den eigentlichen Betrieb der Tiefbauvorrichtung als auch auf Stillstandzeiten beziehen, bei denen die Tiefbauvorrichtung so vor Diebstahl und Vandalismus, etwa zu Nachtzeiten, geschützt ist.

Es ist erfindungsgemäß, dass durch die Steuereinheit ein Warnsignal abgebbar ist, wenn sich eine Person oder ein Gegenstand relativ der Tiefbauvorrichtung annähert und in einen Sicherheitsbereich eindringt. Dabei kann insbesondere in einer elektronischen Steuereinheit ein Sicherheitsbereich mit einem vorgebbaren Sicherheitsabstand, welcher etwa 1 bis 2 m betragen kann, virtuell hinterlegt sein. Das von der mindestens einen Kamera erstellte Bild kann dabei über eine entsprechende Bildverarbeitungssoftware überwacht werden, so dass die Steuereinheit automatisch erkennt, wenn eine mögliche Kollisionsgefahr beim Verfahren der Tiefbauvorrichtung oder sich im Stillstand oder im sonstigen Betrieb der Tiefbauvorrichtung eine Person der Tiefbauvorrichtung annähert.

Das Warnsignal kann in geeigneter Weise etwa als Warnton oder als Warnlicht unmittelbar an der Tiefbauvorrichtung angezeigt werden. Gleichzeitig kann durch das Warnsignal eine Betriebsunterbrechung der Tiefbauvorrichtung bewirkt werden, wenn sich insbesondere eine Person in einem inneren Gefahrenbereich an der Tiefbauvorrichtung befindet, welcher ein Teil des definierten Warnbereichs sein kann.

Nach der Erfindung kann die Tiefbauvorrichtung insbesondere ein Bohrgerät, insbesondere ein Pfahlbohrgerät, ein Schlitzwandgerät, insbesondere eine Schlitzwandfräse oder einen Schlitzwandgreifer, einen Rüttler und/oder eine Ramme sein.

Gemäß einem weiteren Aspekt der Erfindung betrifft diese ein System zum Überwachen einer Baustelle, wobei mehrere erfindungsgemäße Tiefbauvorrichtungen, wie zuvor beschrieben, vorgesehen sind und die Tiefbauvorrichtungen mit einer gemeinsamen Steuereinheit verbunden sind, durch welche die Bilder von einer einzelnen Tiefbauvorrichtung zu einer Gesamtansicht der Baustelle zusammengesetzt werden. Gemäß diesem System können so die Überwachungseinrichtungen von mehreren Tiefbauvorrichtungen miteinander vernetzt und verschaltet werden, so dass eine Gesamtansicht einer Baustelle erreicht werden kann. Hierdurch kann eine besonders gute Überwachung und damit Sicherung der einzelnen Tiefbauvorrichtungen und der Baustelle insgesamt erreicht werden.

Die Steuereinheit kann auch mit einer entsprechenden Speichereinrichtung versehen sein, mit welcher die Bilder von einzelnen Tiefbauvorrichtungen oder von allen Tiefbauvorrichtungen abgespeichert werden. Hierdurch kann sowohl die Arbeitssicherheit als auch die Sicherheit gegen Diebstahl und Vandalismus an einer Baustelle weiter erhöht werden.

Insbesondere ist das erfindungsgemäße System dadurch weitergebildet, dass durch die Steuereinheit ein Warnsignal abgegeben wird, wenn sich eine Person in den Sicherheitsbereich der Baustelle begibt. Durch die Steuereinheit wird durch eine entsprechende Bildverarbeitungssoftware und einen durch Bedienpersonal vorgegebenen Sicherheitsabstand ein Sicherheitsbereich definiert. Bei einem Eindringen von Personen in diesen Sicherheitsbereich kann dann ein entsprechendes Warnsignal und gegebenenfalls auch ein Betriebsstopp einzelner oder aller Tiefbauvorrichtungen und eventuell weiterer an der Baustelle vorhandener Baumaschinen ausgelöst werden.

Der Sicherheits- oder Warnbereich kann zweigeteilt sein, wobei in einem äußeren Bereich zunächst nur ein Warnsignal erfolgt, während in einem definierten inneren Bereich dann der Betriebsstopp erfolgt.

Die Erfindung wird nachfolgend anhand eines bevorzugten Ausführungsbeispieles erläutert, welches schematisch in den Zeichnungen dargestellt ist. In den Zeichnungen zeigen:
- Fig. 1: eine Seitenansicht einer erfindungsgemäßen Tiefbauvorrichtung und
- Fig. 2: eine Anzeigedarstellung bei der Tiefbauvorrichtung von Fig. 1.

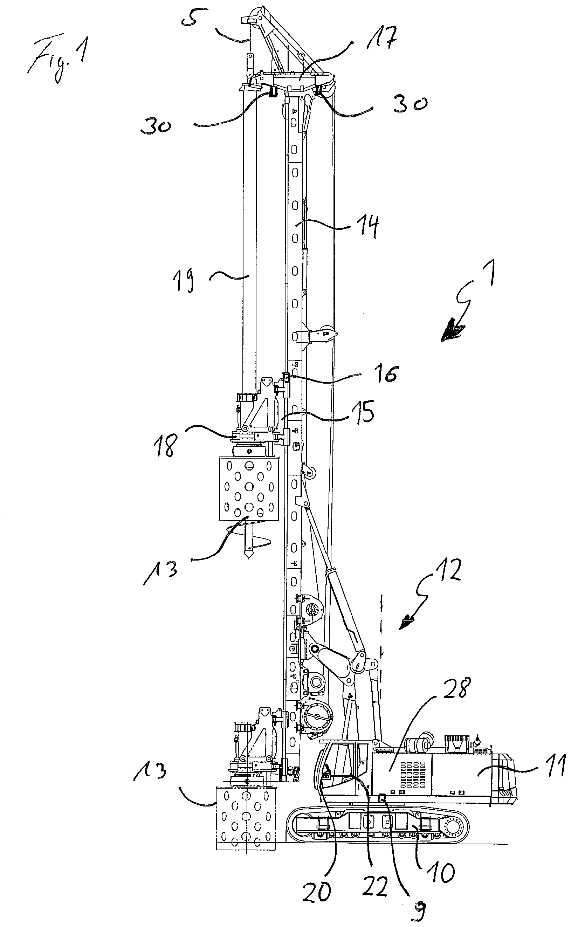

Gemäß Fig. 1 ist eine erfindungsgemäße Tiefbauvorrichtung 1 als ein Bohrgerät ausgebildet. Die Tiefbauvorrichtung 1 weist ein Trägergerät 9 mit einem Unterwagen 10 auf, auf welchem ein Oberwagen 11 mit einem Bedienstand 22 und einer Antriebseinheit 28 drehbar gelagert sind.

Über eine Mastanlenkung 12 ist am Oberwagen 11 ein vertikaler Mast 14 verschwenkbar gelagert. An einer Vorderseite des Mastes 14 ist eine Mastführung 16 angeordnet, entlang welcher ein Mastschlitten 15 mit einem Bohrantrieb 18 verschiebbar gelagert ist. Der Bohrantrieb 18 treibt ein Bohrwerkzeug 13 drehend an, welches in grundsätzlich bekannter Weise an einer Kellystange 19 angebracht ist, welche wiederum über ein Hauptseil 5 über einen Mastkopf 17 vertikal verstellbar gelagert ist.

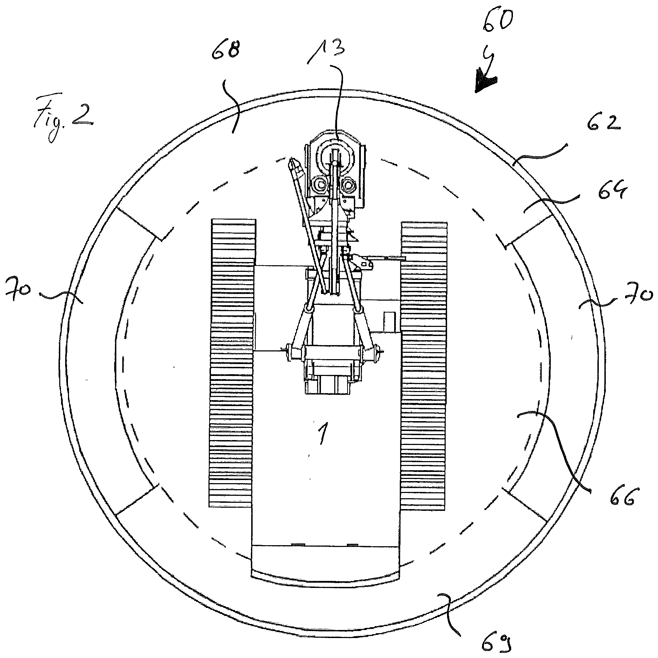

Gemäß der Erfindung ist am oberen Ende des Mastes 14 ein quer gerichteter Mastkopf 17 angebracht, an dessen Unterseite zwei Kameras 30 eines erfindungsgemäßen Überwachungssystems angeordnet sind. Die Kameras 30 sind nach unten gerichtet, um von oben ein Bild 60 der Tiefbauvorrichtung 1 zu erzeugen, welches beispielhaft in Fig. 2 dargestellt ist.

Dabei werden die Bilder von den Kameras 30, welche an dem quer gerichteten Mastkopf 17 an einer Vorder- und eine Rückseite bezüglich des Mastes 14 angeordnet sind, zu einer Steuereinheit 20 im Bedienstand 22 des Trägergerätes 9 übertragen. Die Steuereinheit 20 kann dabei einen Monitor aufweisen, an welchem das in Fig. 2 schematisch dargestellte Bild aus den Bildern der Kameras 30 mittels einer Bildverarbeitungssoftware zusammengesetzt und angezeigt wird.

Bei dem so erzeugten Bild 60 sind die Tiefbauvorrichtung 1 und eine Umgebung mit einem vorab definierten, im dargestellten Ausführungsbeispiel kreisförmigen Sicherheitsbereich 2 gezeigt. Der Sicherheitsbereich kann durch die Software der Steuereinheit in das Bild projiziert werden, um einer Bedienperson einen besseren Überblick zu verschaffen. Sofern sich relativ zur Tiefbauvorrichtung 1 eine Person oder ein Gegenstand nähert und in den Sicherheitsbereich 62 eindringt, kann über die Steuereinheit 20 ein Warnsignal in akustischer, optischer oder sonstiger Weise ausgegeben werden.

Vorzugsweise ist der Sicherheitsbereich 62 in einen äußeren ringförmigen Warnbereich 64 und einen inneren kreisförmigen Warnbereich 66 aufgeteilt. Die einzelnen Warnbereiche 64, 66 können dabei selbst in weitere Sektoren unterteilt sein, so in dem dargestellten Ausführungsbeispiel, in einen Frontsektor 68, einen Hecksektor 69 und zwei seitlichen Sektoren 70. Bei einem Eindringen in diese unterschiedlichen Warnbereiche 64, 66 oder Sektoren können durch die Steuereinheit unterschiedliche Maßnahmen erfolgen. So kann bei einem Eindringen lediglich in den ringförmigen äußeren Warnbereich 64 ein Warnsignal abgegeben werden. Bei einem weiteren Vordringen relativ zur Tiefbauvorrichtung 1 in den inneren Warnbereich 66, der eine unmittelbare Gefahrenzone im Betrieb der Tiefbauvorrichtung darstellen kann, kann durch die Steuereinheit beispielsweise ein Betriebsstopp erfolgen.

Durch das erfindungsgemäße System kann so eine erhöhte Arbeitssicherheit und eine verbesserte Überwachung der Tiefbauvorrichtung 1 erzielt werden. Insbesondere können die Kameras 30 auch im Stillstand der Tiefbauvorrichtung 1 in Betrieb sein, um so etwa einen unbefugten Zutritt zu der Tiefbauvorrichtung 1 festzustellen und an einen Steuereinheit 20, die auch entfernt von der Tiefbauvorrichtung 1 angeordnet sein kann, zu übermitteln. Von einer entsprechend entfernten Zentrale mit der Steuereinheit 20 können dann entsprechende Gegenmaßnahmen eingeleitet werden, wie die Abgabe eines Warnsignals, das Einschalten der Beleuchtung und/oder eine Information an ein Sicherheits- oder Wachpersonal abgegeben werden.

## Patentansprüche

1. Tiefbauvorrichtung mit
einem Trägergerät (9) mit einem Unterwagen (10) mit Raupenfahrwerk, wobei auf dem Unterwagen (10) ein Oberwagen (11) mit einem Bedienstand (22) und einer Antriebseinheit (28) drehbar gelagert ist, und mit einem Mast (14), welcher vertikal gerichtet und an dem Oberwagen (11) angebracht ist,
wobei an einem oberen Bereich des Mastes (14) mindestens eine Kamera (30) angeordnet ist, durch welche ein Bild der Tiefbauvorrichtung (1) und ihrer Umgebung hierzu erfassbar ist,
**dadurch gekennzeichnet ,**
**dass** die mindestens eine Kamera (30) mit mindestens einer Steuereinheit (20) in Verbindung steht und
**dass** durch die Steuereinheit (20) ein Warnsignal abgebbar ist, wenn sich eine Person oder ein Gegenstand relativ der Tiefbauvorrichtung (1) annähert und in einen Sicherheitsbereich (62) eindringt.

2. Tiefbauvorrichtung nach Anspruch 1,
**dadurch gekennzeichnet ,**
**dass** mehrere Kameras (30) angeordnet sind, welche in unterschiedliche Richtungen ausgerichtet sind.

3. Tiefbauvorrichtung nach Anspruch 1 oder 2,
**dadurch gekennzeichnet ,**
**dass** die mindestens eine Kamera (30) schwenkbar gelagert und angetrieben ist.

4. Tiefbauvorrichtung nach einem der Ansprüche 1 bis 3,
**dadurch gekennzeichnet ,**
**dass** durch die mindestens eine Kamera (30) ein 360°-Umgebungsbild (60) erstellbar ist.

5. Tiefbauvorrichtung nach einem der Ansprüche 1 bis 4,
**dadurch gekennzeichnet ,**
**dass** die Steuereinheit (20) in einem Bedienstand (22) der Tiefbauvorrichtung (1) und/oder entfernt von der Tiefbauvorrichtung (1) angeordnet ist.

6. Tiefbauvorrichtung nach einem der Ansprüche 1 bis 5,
**dadurch gekennzeichnet ,**
**dass** die Tiefbauvorrichtung (1) ein Bohrgerät, ein Schlitzwandgerät, ein Rüttler und/oder eine Ramme ist.

7. System zum Überwachen einer Baustelle,
**dadurch gekennzeichnet ,**
**dass** mehrere Tiefbauvorrichtungen (1) nach einem der Ansprüche 1 bis 6 vorgesehen sind und
**dass** die Tiefbauvorrichtungen (1) mit einer gemeinsamen Steuereinheit (20) verbunden sind, durch welche die Bilder (60) von einer einzelnen Tiefbauvorrichtung (1) zu einer Gesamtansicht einer Baustelle zusammengesetzt werden.

8. System nach Anspruch 7,
**dadurch gekennzeichnet ,**
**dass** durch die Steuereinheit (20) ein Warnsignal abgegeben wird, wenn sich eine Person in einen Sicherheitsbereich (62) der Baustelle begibt.

## Claims

1. Civil engineering device with an undercarriage (10) with crawler chassis, wherein an upper carriage (11) having a control station (22) and a drive unit (28) is mounted rotably on the undercarriage (10), and having a mast (14), which is oriented vertically and mounted on the upper carriage (11),
wherein on an upper area of the mast (14) is arranged at least one camera (30), by which an image of the civil engineering device (1) and its surroundings to this can be recorded,
**characterized in that**
the at least one camera (30) is connected to at least one control unit (20) and that a warning signal can be emitted by the control unit (20) when a person or an object approaches relative to the civil engineering device (1) and enters a security area (62).

2. Civil engineering device according to claim 1,
**characterized in that**
several cameras (30) are arranged, which are oriented in different directions.

3. Civil engineering device according to claim 1 or 2,
**characterized in that**
the at least one camera (30) is supported and driven pivotably.

4. Civil engineering device according to one of claims 1 to 3,
**characterized in that**
a 360° image (60) of the surroundings can be produced by the at least one camera (30).

5. Civil engineering device according to one of claims 1 to 4,
**characterized in that**
the control unit (20) is arranged in a control station (22) of the civil engineering device (1) and/or remote from the civil engineering device (1).

6. Civil engineering device according to one of claims 1 to 5,
**characterized in that**
the civil engineering device (1) is a drill rig, a diaphragm wall machine, a vibrator and/or a ram.

7. System for monitoring a construction site,
**characterized in that**
several civil engineering devices (1) according to one of claims 1 to 6 are provided and
that the civil engineering devices (1) are connected to a common control unit (20), by which the images (60) from an individual civil engineering device (10) are put together into an overall image of a construction site.

8. System according to claim 7,
**characterized in that**
a warning signal is emitted by the control unit (20) when a person enters a security area (62) of the construction site.

## Revendications

1. Dispositif de génie civil comprenant
un engin porteur (9) avec un châssis inférieur (10) avec un train de roulement à chenilles, un châssis supérieur (11) avec un poste de commande (22) et une unité d'entraînement (28), le châssis supérieur étant logé de manière rotative sur le châssis inférieur (10), et avec un mât (14) qui est orienté verticalement et qui est monté sur le châssis supérieur (11),
au moins une caméra (30) étant disposée sur une zone supérieure du mât (14), par laquelle une image du dispositif de génie civil (1) et de son environnement peut être saisie.
**caractérisé**
- **en ce que** ladite au moins une caméra (30) est reliée avec au moins une unité de commande (20) et
- **en ce qu'**un signal d'alarme peut être émis par l'unité de commande (20) lorsqu'une personne ou un objet s'approche relativement du dispositif de génie civil (1) et pénètre dans une zone de sécurité (62).

2. Dispositif de génie civil selon la revendication 1,
caractérisé en ce plusieurs caméras (30) sont disposées, lesquelles sont orientées dans des directions différentes.

3. Dispositif de génie civil selon la revendication 1 ou 2,
**caractérisé en ce que** ladite au moins une caméra (30) est montée de manière à pouvoir pivoter et entraînée.

4. Dispositif de génie civil selon l'une des revendications 1 à 3,
**caractérisé en ce que** ladite au moins une caméra (30) permet de produire une image de l'environnement à 360° (60).

5. Dispositif de génie civil selon l'une des revendications 1 à 4,
**caractérisé en ce que** l'unité de commande (20) est disposée dans un poste de commande (22) du dispositif de génie civil (1) et/ou à distance du dispositif de génie civil (1).

6. Dispositif de génie civil selon l'une quelconque des revendications 1 à 5,
caractérisé en ce le dispositif de génie civil (1) est un engin de forage, un engin d'excavation de tranchées, un vibrateur et/ou un bélier.

7. Système de surveillance d'un chantier,
**caractérisé en ce que** plusieurs dispositifs de génie civil (1) selon l'une des revendications 1 à 6 sont prévus, et
que les dispositifs de génie civil (1) sont reliés à une unité de commande commune (20) par laquelle les images (60) d'un seul dispositif de génie civil (1) sont assemblées en une vue globale d'un chantier.

8. Système selon la revendication 7,
**caractérisé en ce qu'**un signal d'alerte est émis par l'unité de commande (20) lorsqu'une personne se rend dans une zone de sécurité (62) du chantier.
